Europäisches Patentamt

European Patent Office

Office européen des brevets

(19)

(11) Numéro de publication: **0 059 142**
**B1**

(12) **FASCICULE DE BREVET EUROPEEN**

(45) Date de publication du fascicule du brevet: **03.05.89**

(51) Int. Cl.⁴: **F 02 K 9/18,** F 02 K 9/10

(21) Numéro de dépôt: **82400270.3**

(22) Date de dépôt: **16.02.82**

(54) **Chargement propulsif birégime à canal en trompette comportant une section en étoile.**

(30) Priorité: **17.02.81 FR 8103048**

(43) Date de publication de la demande:
**01.09.82 Bulletin 82/35**

(45) Mention de la délivrance du brevet:
**03.05.89 Bulletin 89/18**

(84) Etats contractants désignés:
**BE DE GB IT SE**

(56) Documents cités:
**FR-A-1 445 331
FR-A-1 483 472
FR-A-1 483 473
FR-A-2 049 166
FR-A-2 169 067
GB-A-1 108 382
US-A-3 099 963
US-A-4 015 427**

(73) Titulaire: **SOCIETE NATIONALE DES POUDRES
ET EXPLOSIFS
12, quai Henri IV
F-75181 Paris Cédex 04 (FR)**

(72) Inventeur: **Dalet, Francis
LES HAMEAUX DE PERRIN
F-33370 Tresses (FR)**
Inventeur: **Ducourneau, Bernard
22 rue Jean-Moulin
F-33260 La Teste (FR)**

Courier Press, Leamington Spa, England.

## Description

L'invention concerne un chargement propulsif dont la combustion se déroule selon au moins deux régimes de poussée et qui permet d'obtenir au moins une phase d'accélération et une phase de croisière de l'engin autopropulsé équipé de ce chargement.

Les phases de propulsion d'accélération et de croisière d'un engin autopropulsé sont le plus souvent obtenues par la combustion de deux chargements propulsifs distincts; mais des chargements monolithiques birégime sont connus, notamment les chargements bicompositions à combustion frontale ou à combustion radiale, de tels chargements présentant une section sensiblement constante mais étant constitués, d'une part d'un propergol à vitesse de combustion élevée pour réaliser la phase d'accélération, et d'autre part d'un propergol à faible vitesse de combustion pour réaliser la phase de croisière.

Les chargements propulsifs à canal en trompette sont également connus. Ce sont des chargements dont la surface extérieure est sensiblement cylindrique et dont le canal axial de mise à feu comporte, une partie située en amont de faible section dont la surface instantanée de combustion est croissante, et une partie située en aval, de plus forte section, dont la surface instantanée de combustion est décroissante, les effets contraires de croissance et de décroissance se compensant de manière à obtenir des chargements engendrant une poussée sensiblement constante. La décroissance de la surface instantanée de combustion de la partie du canal située en aval peut être obtenue, soit essentiellement par la réduction de la longueur de la surface de combustion, cette partie du canal pouvant être conique comme cela est représenté sur le dessin du brevet français 2 049 166, soit également par la réduction du périmètre de combustion d'une section de la partie aval du canal lorsque cette partie est munie de fentes radiales comme cela est représenté par la figure 1 du brevet français 2 169 067. Le brevet US 3,099,963 illustre ce type de chargement propulsif à canal en trompette étoilée et définit des chargements à surface de combustion sensiblement constante, et notamment un chargement à surface de combustion rigoureusement constante obtenu en utilisant un canal dont la partie aval étoilée comporte cinq branches d'étoile qui délimitent cinq dents de propergol en forme de secteurs dont les angles d'ouverture sont de 25°, 50°, 75°, 100 et 110°.

Les chargements propulsifs dits "blocs trompette" sont particulièrement intéressants car leurs coefficients de remplissage sont élevés, c'est à dire que pour un volume de corps de propulseur donné ils permettent l'utilisation d'un volume maximal de propergol tout en limitant les phénomènes de combustion érosive du canal axial puisque ce canal présente une section aval plus importante que la section amont. Par contre, les blocs trompettes sont des blocs engendrant une poussée sensiblement constante ce qui limite leurs possibilités d'emploi.

La présente invention a pour objet un nouveau chargement propulsif cylindrique du type dit "bloc-trompette" à combustion radiale comportant un canal axial de mise à feu qui présente d'une part une section droite réduite dans la zone amont dont la surface intantanée de combustion est croissante et d'autre part une section droite étoilée plus importante dans la partie aval dont la surface instantanée de combustion est décroissante, l'étoile de cette section droite comportant un nombre pair de branches radiales qui déterminent des dents de propergol réparties symétriquement par rapport à l'axe du chargement.

Le chargement selon l'invention est caractérisé en ce que:

— la partie aval du canal à section droite étoilée comporte une zone longitudinale dans laquelle l'étoile du canal est formée par au moins deux dents de propergol dont les flancs forment entre eux le même grand angle au centre d'ouverture (A) et par au moins deux dents de propergol dont les flancs forment entre eux le même petit angle au centre d'ouverture (a),

— le grand angle au centre d'ouverture (A) étant défini par rapport au petit angle au centre d'ouverture (a) par la relation:

$$(2a-10°)<A<(2a+25°)$$

Ce petit angle d'ouverture (a) étant compris entre 25° et 60° et

— la longueur (1) de la partie aval étoilée est au moins égale au tiers de la longueur totale (L) du chargement.

Le nombre pair de branches d'étoile, les valeurs des angles des deux types de dents de propergol et les dimensions de ces branches, sont déterminés selon la courbe d'évolution de la surface de combustion qui est désirée.

Le nombre de dents de propergol peut varier de 4 à I2, et d'autre part dans une section droite donnée toutes les branches d'étoile présentent une même profondeur radiale et/ou une même largeur, ces branches d'étoile ayant la forme de fentes à parois parallèles.

Selon un mode de réalisation, la zone longitudinale du canal dont les dents de propergol ont des angles au centre d'ouverture différents est une zone qui d'une part comporte six branches d'étoile déterminant deux dents de propergol de grand angle d'ouverture (A) et quatre dents de propergol de petit angle d'ouverture (a), et qui d'autre part comporte un canal à section droite étoilée dont les branches d'étoile débouchent dans un canal axial. Selon ce mode de réalisation la zone du canal dont les dents de propergol ont des angles au centre d'ouverture différents est une zone à section droite constante qui s'étend à toute la partie du canal à section droite étoilée, mais selon d'autres modes de réalisation la partie du canal à section droite étoilée peut comprendre une zone amont conforme à l'invention et une zone aval comportant une étoile dont le nombre de branches est supérieur, chaque dent de propergol de grand angle d'ouverture pouvant être munie d'une fente centrale supplémentaire, le nombre de branches d'étoile du canal croissant d'amont en aval du chargement et ces branches pouvant être éventuellement partiellement inhibées.

Plus particulièrement la zone longitudinale du canal dont les dents de propergol ont des angles au centre différents d'ouverture est la zone située le plus en aval, et la portion du canal située le plus en amont présente une section droite circulaire.

Selon une autre variante de construction, la totalité du canal central présente une section droite étoilée, la portion du canal située la plus en amont ne comportant que deux branches diamétralement opposées.

Préférentiellement, le chargement, propulsif selon l'invention est monobloc et est réalisé à partir d'une unique composition de propergol, et afin de minimiser les effets de bord de l'extrémité aval du bloc il est intéressant que la longueur du bloc soit supérieure à cinq fois le diamètre extérieur, l'invention étant particulièrement bien adaptée à la réalisation de blocs présentant un élancement (longueur/diamètre) supérieur à sept.

Selon un mode de réalisation préférentiel, la longueur (1) de la zone longitudinale du canal dont les dents de propergol ont des angles différents d'ouverture est définie par rapport à la longueur (L) du chargement par la relation:

$$\frac{4L}{10} < 1 < \frac{6L}{10}$$

Les avantages obtenus par la mise en oeuvre de cette invention consistent essentiellement en la possibilité de réaliser un chargement monobloc de grand élancement qui permet deux régimes de combustion adaptables tout en conservant un coefficient de remplissage élevé, une distribution symétrique du flux de gaz de combustion ainsi qu'un taux de résiduel de propergol qui peut être nul, la courbe d'évolution de la surface de combustion en fonction de l'épaisseur brûlée chutant très brusquement en fin de combustion. L'invention de plus permet de réaliser un grand nombre de formes de blocs en ajustant les variables et notamment les angles d'ouvertures (A) et (a) des dents de propergol, l'angle (A) étant essentiellement fonction de l'épaisseur relative

$$\frac{e}{R}$$

de propergol à brûler (e étant l'épaisseur à brûler et R étant le rayon interne de l'inhibiteur périphérique), et l'angle (a) étant essentiellement fonction de l'épaisseur de propergol devant être brûlée durant la première phase de combustion qui s'effectue avec une surface de combustion élevée.

Dans ce qui suit, l'invention est exposée plus en détail à l'aide de dessins correspondant à un exemple du mode de réalisation préférentiel.

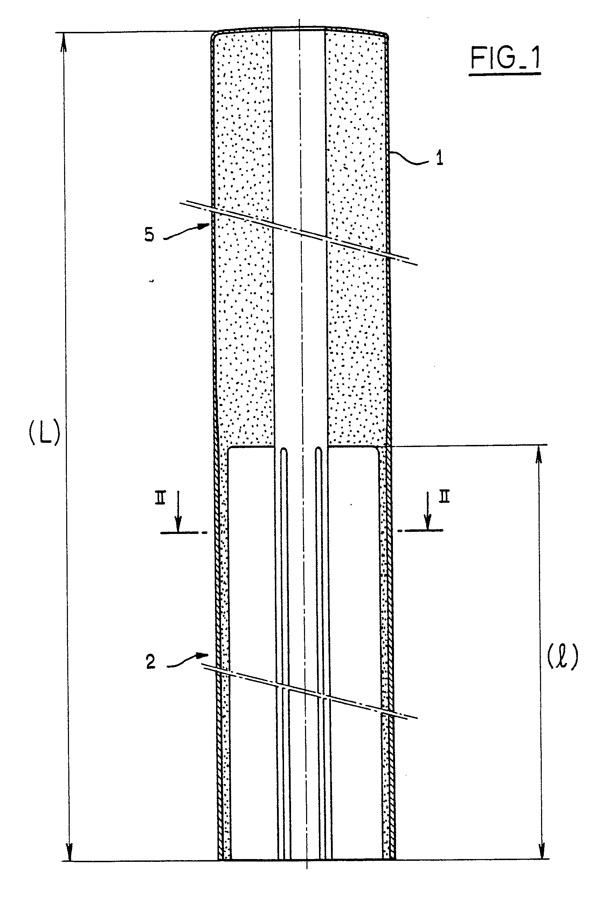

La figure 1 représente en coupe longitudinale axiale un chargement propulsif monobloc;

La figure 2 représente la section selon le plan II—II du chargement propulsif monobloc représenté à la figure 1;

La figure 3 représente le diagramme d'évolution de la surface instanée de combustion, en fonction de l'épaisseur du propergol brûlé, du chargement propulsif monobloc représenté aux figures 1 et 2.

Selon cet exemple le bloc de propergol est recouvert extérieurement par un inhibiteur de combustion (1) à l'exception de l'extrémité aval, et cet inhibiteur présente deux épaisseurs différentes, l'épaisseur la plus forte correspondant à la partie longitudinale du canal axial qui présente une section droite étoilée. Dans le cas particulier de cet exemple, la zone longitudinale dans laquelle l'étoile du canal détermine des dents de propergol d'angles au centre d'ouvertures différents occupe toute la partie du canal à section droite étoilée et le bloc ne présente donc que deux zones à section droite constante, et de longueurs sensiblement égales:

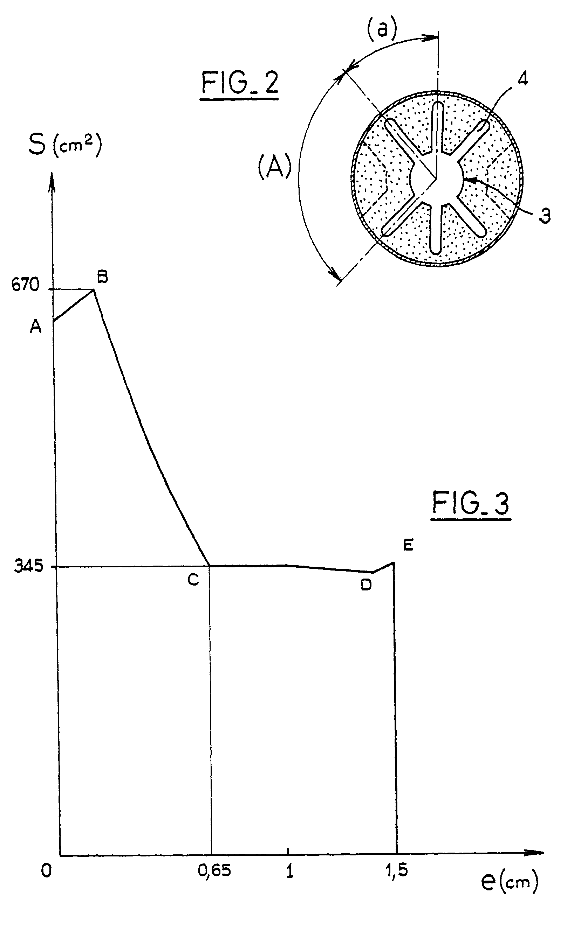

— la zone aval (2) dont le canal présente une section droite étoilée dont la partie centrale est circulaire (3) et à partir duquel rayonnent six branches d'étoile (4) qui sont à flancs parallèles et à extrêmités arrondies sans contact avec l'inhibiteur, (figure 2) et qui ménagent deux dents de propergol de grand angle au centre d'ouverture (A) et quatre dents de propergol de petit angle au centre d'ouverture (a), réparties symétriquement par rapport à l'axe du chargement,

— la zone amont (5) dont le canal présente une section droite circulaire d'un diamètre légèrement inférieur au diamètre de la partie centrale du canal de la zone aval (2).

Le diagramme d'évolution de surface représenté à la figure 3 correspond à l'exemple décrit ci-dessus, le dimensionnement essentiel correspondant aux valeurs qui suivent. La longueur totale (L) du bloc est de 55 cm et la longueur (1) de la zone du canal dont les dents de propergol ont des angles d'ouverture différents est de 27,5 cm. Le diamètre extérieur du chargement est de 4,4 cm et le diamètre du canal à section circulaire de la zone amont est de 1,33 cm. Le grand angle au centre d'ouverture (A) est égal à 94 degrés et le petit angle au centre d'ouverture (a) est de 43 degrés, la largeur des branches d'étoile étant de 0,27 cm.

Un tel chargement correspond à un volume de propergol de 650 cm³ et l'évolution de la combustion de ce bloc de propergol peut-être suivie sur le diagramme qui présente cinq points caractéristiques:

— le point A correspond à la surface de mise à feu,

— le point B correspond à l'instant où les fronts de combustion issus des extrémités des branches d'étoile entrent en contact avec l'inhibiteur périphérique,

— le point C correspond à l'instant où les sommets des secteurs en combustion, issus des quatre dents de propergol de petit angle d'ouverture (a), entrent en contact avec l'inhibiteur périphérique, les fronts de combustion issus des deux dents de propergol de grand angle d'ouverture (A) étant représentés en pointillés sur la figure 2,

— le point D correspond à l'instant où les sommets des secteurs en combustion, issus des deux dents de propergol de grand angle d'ouverture (A) entrent en contact avec l'inhibiteur périphérique,

— le point E correspond à l'instant où le front de combustion cylindrique de révolution, issu du canal à section circulaire de la zone amont, atteint l'inhibiteur périphérique.

Les secteurs en combustion issus des dents de propergol de petit angle au centre d'ouverture sont des surfaces de combustion très régressives qui engendrent la portion de courbe BC, malgré la progressivité de la zone amont, tandis que le second régime de combustion se déroule à surface sensiblement constante, la dégressivité des secteurs en combustion issus des dents de propergol de grand angle au centre d'ouverture (A) étant compensée par la progressivité du front de combustion cylindrique de révolution issu du canal à section droite circulaire de la zone amont.

L'invention peut donner lieu à de nombreux modes de réalisations particuliers, et l'exemple de bloc de propergol dont les formes sont décrites ci-dessus peut se prêter à de nombreuses variantes, certaines branches de l'étoile pouvant être notamment d'une profondeur radiale égale à l'épaisseur à brûler et rejoindre ainsi l'inhibiteur périphérique sur une portion de leur longueur (1), et/ou certaines branches pouvant présenter une profondeur radiale variable, cette profondeur décroissant d'aval en amont.

L'invention permet de réaliser préférentiellement des chargements dont le premier régime de combustion s'éffectue à surface de combustion fortement décroissante et dont le second régime de combustion s'effectue à surface de combustion sensiblement constante, comme cela est décrit ci-dessus, mais l'invention permet également de réaliser des chargements dont le premier régime de combustion s'effectue à surface de combustion légèrement décroissante ou même légèrement croissante, le second régime de combustion pouvant s'effectuer à surface de combustion décroissante.

**Revendications**

1. Chargement propulsif cylindrique du type dit "bloc-trompette" à combustion radiale comportant un canal axial de mise à feu qui présente d'une part une section droite réduite dans la zone amont (5) dont la surface instantanée de combustion est croissante et d'autre part une section droite étoilée plus importante dans la partie aval dont la surface instantanée de combustion est décroissante, l'étoile de cette section droite comportant un nombre pair de branches radiales (4), qui déterminent des dents de propergols réparties symétriquement par rapport à l'axe du chargement caractérisé en ce que:

— la partie aval du canal à section droite étoilée comporte une zone longitudinale (2) dans laquelle l'étoile du canal est formée par au moins deux dents de propergol dont les flancs forment entre eux le même grand angle au centre d'ouverture (A) et par au moins deux dents de propergol dont les flancs forment entre eux le même petit angle au centre d'ouverture (a),

— le grand angle au centre d'ouverture (A) étant défini par rapport au petit angle au centre d'ouverture (a) par la relation:

$$(2a-10°)<A<(2a+25°)$$

Ce petit angle d'ouverture (a) étant compris entre 25° et 60° et,

— la longueur (1) de la partie aval étoilée est au moins égale au tiers de la longueur totale (L) du chargement.

2. Chargement propulsif selon la revendication 1, caractérisé en ce que, dans une section droite donnée, toutes les branches d'étoile présentent une même profondeur radiale.

3. Chargement propulsif selon l'une des revendications 1 ou 2, caractérisé en ce que, dans une section droite donnée, toutes les branches d'étoile présentent une même largeur.

4. Chargement propulsif selon l'une des revendications 1 à 3, caractérisé en ce que la zone longitudinale du canal, dont les dents de propergol ont des angles au centre d'ouverture différents, est une zone comportant six branches d'étoile.

5. Chargement propulsif selon l'une des revendications 1 à 4, caractérisé en ce que la zone longitudinale du canal, dont les dents de propergol ont des angles au centre d'ouverture différents, est une zone à section droite constante.

6. Chargement propulsif selon l'une des revendications 1 à 5, caractérisé en ce que la zone longitudinale du canal dont les dents de propergol ont des angles au centre d'ouverture différents est la zone située la plus en aval.

7. Chargement propulsif selon l'une des revendications 1 à 6, caractérisé en ce que la portion du canal située le plus en amont présente une section droite circulaire.

8. Chargement propulsif selon l'une des revendications précédentes, caractérisé en ce qu'il est monobloc.

9. Chargement propulsif selon l'une des revendications précédentes, caractérisé en ce que la longueur du chargement est supérieure à cinq fois le diamètre extérieur.

10. Chargement propulsif selon l'une des revendications 1 à 9, caractérisé en ce que longueur (1) de la zone longitudinale du canal dont les dents de propergol ont des angles au centre d'ouverture différents est définie par rapport à la longueur du chargement (L) par la relation:

$$\frac{4L}{10}<1<\frac{6L}{10}$$

## Patentansprüche

1. Zylindrischer Feststofftreibsatz vom Typ genannt "Trompetenstopfen" ("bloc-trompette") von radialer Verbrennung, mit einem axialen Zünd- bzw. Feuerungskanal, der einerseits einen verringerten Querschnitt in der oberen Zone (5) aufweist, dessen momentane Verbrennungsoberfläche ansteigend ist, und andererseits einen sternförmigen Querschnitt aufweist, der im unteren Bereich größer ist, dessen momentane Verbrennungsoberfläche abnehmend ist, wobei der Stern dieses Querschnitts eine geradzahlige Anzahl von radialen Armen (4) aufweist, die Brennstoffzähne oder -vorsprünge bestimmen, die symmetrisch bezüglich der Treibsatzachse angeordnet sind, dadurch gekennzeichnet, daß:
— der Bereich unterhalb des Kanals mit sternförmigem Querschnitt eine Längszone (2) aufweist, in der der Stern des Kanals aus wenigstens zwei Brennstoffzähnen gebildet ist, deren Flanken untereinander den gleichen großen Winkel zum Öffnungszentrum (A) aufweisen, und aus wenigstens zwei Brennstoffzähnen gebildet ist, deren Flanken untereinander den gleichen kleinen Winkel mit dem Öffnungszentrum (a) aufweisen,
— der große Winkel zum Öffnungszentrum (A) bezüglich des kleinen Winkels zum Öffnungszentrum (a) durch das Verhältnis gebildet wird:

$$(2a-10°)<A<(2a+25°),$$

wobei der kleine Öffnungswinkel (a) zwischen 25° und 60° liegt, und
— die Länge (1) des sternförmigen unteren Bereiches wenigstens gleich einem Drittel der Gesamtlänge (L) des Treibsatzes ist.

2. Feststofftreibsatz nach Anspruch 1, dadurch gekennzeichnet, daß in einem gegebenen Querschnitt alle Sternzweige eine gleiche radiale Tiefe aufweisen.

3. Feststofftreibsatz nach Anspruch 1 oder 2, dadurch gekennzeichnet, daß in einem gegebenen Querschnitt alle Sternzweige cine gleiche Breite aufweisen.

4. Feststofftreibsatz nach einem der Ansprüche 1 bis 3, dadurch gekennzeichnet, daß die Längszone des Kanals, dessen Brennstoffzähne unterschiedliche Winkel zum Öffnungszentrum aufweisen, eine Zone ist, die sechs Sternzweige oder -kanäle aufweist.

5. Feststofftreibsatz nach einem der Ansprüche 1 bis 4, dadurch gekennzeichnet, daß die Längszone des Kanals, dessen Brennstoffzähne unterschiedliche Winkel zum Öffnungszentrum aufweisen, eine Zone mit konstantem Querschnitt ist.

6. Feststofftreibsatz nach einem der Ansprüche 1 bis 5, dadurch gekennzeichnet, daß die Längszone des Kanals, dessen Brennstoffzähne zum Öffnungszentrum unterschiedliche Winkel aufweisen, die Zone ist, die am weitesten unten angeordnet ist.

7. Feststofftreibsatz nach einem der Ansprüche 1 bis 6, dadurch gekennzeichnet, daß der Teil des Kanals, der am weitesten oben angeordnet ist, einen ringförmigen Querschnitt aufweist.

8. Feststofftreibsatz nach einem der vorhergehenden Ansprüche, dadurch gekennzeichnet, daß er ein Monoblock ist.

9. Feststofftreibsatz nach einem der vorhergehenden Ansprüche, dadurch gekennzeichnet, daß die Länge des Treibsatzes größer ist als fünfmal der Außendurchmesser.

10. Feststofftreibsatz nach einem der Ansprüche 1 bis 9, dadurch gekennzeichnet, daß die Länge (1) der Längszone des Kanals, dessen Brennstoffzähne unterschiedliche Winkel zum Öffnungszentrum aufweisen, bezüglich der Länge (L) des Treibsatzes durch die Beziehung definiert ist:

$$\frac{4L}{10}<1<\frac{6L}{10}$$

## Claims

1. Cylindrical propellent charge of the type known as "trumpet block" with radial combustion comprising an axial firing channel which has, on the one hand, a reduced cross-section in the upstream region (5) whose instantaneous combustion surface increases and, on the other hand, a larger, star-shaped cross-section in the downstream part whose instantaneous combustion surface decreases, the star of this cross-section comprising an even number of radial arms (4) which determine propellant teeth distributed symmetrically relative to the axis of the charge, characterized in that:
— the downstream part of the channel of star-shaped cross-section comprises a lengthwise region (2) in which the star of the channel is formed by at least two teeth of propellant whose flanks form between them the same large aperture angle (A) at the centre and by at least two teeth of propellant whose flanks form between them the same small aperture angle (a) at the centre,
— the large aperture angle (A) at the centre being defined relative to the small aperture angle (a) at the centre by the relationship:

$$(2a-10°)<A<(2a+25°)$$

This small aperture angle (a) being between 25° and 60°, and
— the length (l) of the star-shaped downstream part is at least equal to one third of the total length (L) of the charge.

2. Propellant charge according to Claim 1, characterized in that, in a given cross-section, all the arms of a star have the same radial depth.

3. Propellant charge according to either of Claims 1 and 2, characterized in that, in a given cross-section, all the arms of a star are of the same width.

4. Propellent charge according to one of Claims 1 to 3, characterized in that the lengthwise region of the channel, whose teeth of propellant have different aperture angles at the centre, is a region comprising six arms of a star.

5. Propellent charge according to one of Claims 1 to 4, characterized in that the lengthwise region of the channel, whose teeth of propellant have different aperture angles at the centre, is a region of constant cross-section.

6. Propellent charge according to one of Claims 1 to 5, characterized in that the lengthwise region of the channel whose teeth of propellant have different aperture angles at the centre is the region situated furthest downstream.

7. Propellent charge according to one of Claims 1 to 6, characterized in that the part of the channel situated furthest upstream is circular in cross-section.

8. Propellent charge according to one of the preceding claims, characterized in that it forms a single block.

9. Propellent charge according to one of the preceding claims, characterized in that the length of the charge is greater than five times the outer diameter.

10. Propellent charge according to one of Claims 1 to 9, characterized in that the length (l) of the lengthwise region of the channel whose teeth of propellant have different aperture angles at the centre is defined relative to the length of the charge (L) by the relationship:

$$\frac{4L}{10} < 1 < \frac{6L}{10}$$

FIG_1

FIG_2

(a)

(A)

4

3

S (cm²)

FIG_3

670

B

A

345

C

D

E

0    0,65    1    1,5    e (cm)